# EUROPÄISCHE PATENTSCHRIFT

(11) **EP 3 797 337 B1**
(45) Veröffentlichungstag und Bekanntmachung des Hinweises auf die Patenterteilung: **28.09.2022**
(21) Anmeldenummer: 19723373.7
(22) Anmeldetag: 08.05.2019
(51) Int. Cl.: G05B 19/406

(54) **VERFAHREN ZUM HANTIEREN EINES WERKSTÜCKS MIT HILFE EINES ENTNAHMEWERKZEUGS UND MASCHINE ZUR DURCHFÜHRUNG DES VERFAHRENS**
METHOD FOR HANDLING A WORKPIECE WITH THE AID OF A REMOVAL TOOL AND MACHINE FOR CARRYING OUT THE METHOD
PROCÉDÉ DE MANIPULATION D'UNE PIÈCE A L'AIDE D'UN OUTIL DE RETRAIT ET MACHINE PERMETTANT DE METTRE EN OEUVRE LE PROCÉDÉ

(30) Priorität: 23.05.2018 DE 102018208126
(43) Veröffentlichungstag der Anmeldung: 31.03.2021
(73) Patentinhaber: TRUMPF Werkzeugmaschinen GmbH + Co. KG, 71254 Ditzingen (DE)
(72) Erfinder: OTTNAD, Jens, 76199 Karlsruhe (DE); BLÖMKER, Christoph, 70197 Stuttgart (DE)
(74) Vertreter: Trumpf Patentabteilung
(86) Internationale Anmeldenummer: PCT/EP2019/061794
(87) Internationale Veröffentlichungsnummer: WO 2019/224004

(56) Entgegenhaltungen:
- EP-A1- 3 093 078
- DE-A1-102009 040 434
- DE-A1-102012 012 988

## Beschreibung

Die Erfindung betrifft ein Verfahren zum Hantieren eines Werkstücks mit Hilfe eines Entnahmewerkzeugs und eine Maschine zum Durchführen eines solchen Verfahrens.

Bei Metall- und Blechbearbeitungsmaschinen, insbesondere bei (teil)automatisierten Laserschneid-/Stanzanlagen werden Entnahmewerkzeuge eingesetzt, um die hergestellten Werkstücke aus der Maschine zu entnehmen und an einen Ablageort zu verbringen. Die Entnahmewerkzeuge umfassen typischerweise eine Vielzahl einzelner Handhabungselemente wie beispielsweise Saugerpins (Saugnäpfe) und/oder Ausdrückpins. Für eine erfolgreiche Entnahme des Werkstücks aus der Maschine ist es erforderlich, in der Maschinensteuerung Parameter zu hinterlegen, die definieren, welche einzelnen der vielen Handhabungselemente des Entnahmewerkzeugs für das jeweilige Werkstück bzw. den jeweiligen Werkstücktyp eingesetzt werden sollen und wie und an welcher Stelle. Die Auswahl der einzusetzenden Handhabungselemente obliegt in der Praxis oftmals einem Programm, das diese anhand der Abmessungen, des Gewichts, des Schwerpunkts des Werkstücks oder ähnlichen Kriterien auswählt. Werden die einzusetzenden Handhabungselemente falsch gewählt, so kann das Werkstück nicht automatisiert entnommen werden oder es kann zu Schwierigkeiten bei der Entnahme kommen. Dies führt zu einem Maschinenstillstand, der durch Bedienpersonal der Maschine aufwendig behoben werden muss.

Aus der EP 3 093 078 A1 ist eine Halteeinrichtung zum Handhaben von zumindest einem Werkstück mit zumindest einem unebenen oder konturierten Flächenabschnitt bekannt geworden.

Weiterhin offenbart die DE 10 2012 012 988 A1 eine Vorrichtung zur automatisierten Handhabung von Werkstücken mittels einer Objekterkennungseinrichtung zum Erfassen der Werkstücke und einem an einem Greifarm angeordneten Greifer zum Greifen der Werkstücke.

Insbesondere wenn regelmäßig neue, andersartige Werkstücke entnommen werden sollen, ist bislang ein erheblicher Aufwand zur Ermittlung geeigneter Parameter für den Entnahmevorgang erforderlich. Zudem kann es im regulären Betrieb zu fehlgeschlagenen Entnahmen kommen, wenn Parameter angewandt werden, die zwar meist (etwa im Umfang einer Versuchsreihe), aber nicht immer (z.B. im Serienbetrieb) zu einer erfolgreichen Entnahme führen.

### Aufgabe der Erfindung

Es ist daher Aufgabe der Erfindung, ein Verfahren und eine Maschine anzugeben, welche ein Entnehmen von verschiedenartigen Werkstücken mit einer verbesserten Zuverlässigkeit erlauben.

### Beschreibung der Erfindung

Diese Aufgabe wird erfindungsgemäß gelöst durch ein Verfahren gemäß Anspruch 1 und eine Maschine gemäß Anspruch 12. In den Unteransprüchen und der Beschreibung sind vorteilhafte Varianten und Ausführungsformen angegeben.

### Erfindungsgemäße Verfahren

Durch den zumindest einen Parameter wird das Entnahmewerkzeug gesteuert. Durch die zumindest eine Kenngröße kann die aus dem zumindest einen Parameter resultierende Ansteuerung des Entnahmewerkzeugs mit der zumindest einen Werkstückinformation verknüpft werden. Zum Erstellen der Entnahmeprognose wird die zumindest eine Kenngröße, welche in Verfahrensschritt C) ermittelt wurde, mit einer entsprechenden Kenngröße des zumindest einen Entnahmeergebnisses aus dem Entnahmeergebnisspeicher verglichen. Die Entnahmeprognose gibt die Wahrscheinlichkeit einer erfolgreichen Entnahme an. Mit Entnahme kann hier der gesamte Prozess gemeint sein, beispielsweise mit einer Trennung des Werkstücks aus einem Restgitter, einem Transport des Werkstückst zu einer Zielposition und einer Ablage an der Zielposition inklusive der dabei ggf. durchzuführenden Drehungen und Beschleunigungen des Werkstücks. Die Entnahmeprognose kann mehrere unterschiedliche Prognosewerte aufweisen, z.B. für Trennung, Abheben, Drehung, Transport und Ablage. Insbesondere betrifft die Entnahmeprognose aber die Trennung des Werkstücks aus dem Restgitter. Die Bewertung der Entnahmeprognose kann durch Vergleich mit einer Mindestwahrscheinlich für eine erfolgreiche Entnahme erfolgen. Allgemeiner kann die Bewertung der Entnahmeprognose eine arithmetische und/oder logische Operation sein. Mehrere Prognosen können zu einem Vektor oder Wert aggregiert werden und mit einem entsprechenden Mindestwahrscheinlichkeits-Vektor oder Wert verglichen werden. Andere arithmetische und logische Operationen sind ebenfalls denkbar. Das Ergebnis der Bewertung der Entnahmeprognose kann eine positive oder eine negative Entnahmeprognose sein. Bei einer positiven Entnahmeprognose wird davon ausgegangen, dass die Entnahme mit einem vorbestimmten Maß an Wahrscheinlichkeit fehlerfrei und zuverlässig erfolgen wird. Das Werkstück kann dann entsprechend der Parameter entnommen werden.

Indem das Entnahmeergebnis (d.h. ob die Entnahme erfolgreich war oder nicht) detektiert (Verfahrensschritt G) und gespeichert (Verfahrensschritt H) wird, kann die Datenbasis für das Erstellen der Entnahmeprognose in Verfahrensschritt D) bei einem erneuten Verfahrensdurchlauf verbreitert werden. Mit anderen Worten steht beim erneuten Verfahrensdurchlauf ein Entnahmeergebnis mehr im Entnahmeergebnisspeicher zur Verfügung. Dadurch kann eine genauere Entnahmeprognose erhalten werden. Insbesondere nach mehrmaligem Verfahrensdurchlauf kann somit sicher vorhergesagt werden, ob die Entnahme mit dem gewählten Parameter für das Entnahmewerkzeug erfolgreich sein wird. Das Entnahmeergebnis kann dabei eine Zuordnung zu der Werkstückinformation, Kenngröße und/oder dem Parameter aufweisen.

Wenn ein neues Werkstück, für das noch kein funktionierender Parameter für das Entnahmewerkzeug bekannt ist, entnommen werden soll, erlaubt das erfindungsgemäße Verfahren eine Abschätzung, ob der angesetzte Parameter für das Entnahmewerkzeug voraussichtlich zu einer erfolgreichen Entnahme führen wird. Dadurch können Entnahmeversuche mit ungeeigneten Parametern vermieden werden. Insbesondere sind bei der Ermittlung des geeigneten Parameters für das Entnahmewerkzeug weniger oder keine manuellen Handlungen erforderlich, da das erfindungsgemäße Verfahren ungeeignete Parameter identifiziert, ohne dass zeitraubende und kostenintensive Versuche durchgeführt werden müssen. Ein neues Werkstück kann insbesondere eine andere Geometrie gegenüber bekannten Werkstücken, für die funktionierende Parameter für das Entnahmewerkzeug bekannt sind, aufweisen. Das neue Werkstück kann auch in seiner Geometrie einem bekannten Werkstück entsprechen, jedoch anders in einer Maschine angeordnet sein, insbesondere an einer anderen Position und/oder in einer anderen Orientierung.

Um eine noch präzisere Entnahmeprognose erstellen zu können, kann vor der Anwendung des erfindungsgemäßen Verfahrens mit den angegebenen Verfahrensschritten das Verfahren mit der Modifikation durchgeführt werden, dass die Entnahme probehalber auch bei einer negativen Entnahmeprognose durchgeführt wird, oder dass die Bewertungskriterien im Hinblick auf eine vermutlich erfolgreiche Entnahme abgesenkt werden. Dadurch werden nicht erfolgreiche Entnahme provoziert, so dass zuverlässiger abgeschätzt werden kann, ob der Wert der zumindest einen Kenngröße für eine erfolgreiche oder nicht erfolgreiche Entnahme spricht.

Vorzugsweise werden im Verfahrensschritt B) mehrere Parameter für das Entnahmewerkzeug erzeugt. Vorzugsweise wird im Verfahrensschritt C) zumindest eine Kenngröße aus mehreren Parametern und/oder mehreren Werkstückinformationen erzeugt. Vorzugsweise werden mehrere Kenngrößen erzeugt. Vorzugsweise werden im Verfahrensschritt D) mehrere Kenngrößen und/oder mehrere Entnahmeergebnisse berücksichtigt.

Hantieren kann das automatisierte Ergreifen, Ablegen, Abwerfen, Sortieren, Kommissionieren, Schütteln, Vibrieren oder ähnliches Bewegen eines Werkstücks sein. Typischerweise wird das Werkstück beim Hantieren aus einem ersten Bereich, insbesondere innerhalb einer Fertigungsmaschine, in einen zweiten Bereich, insbesondere außerhalb der Fertigungsmaschine verbracht. Alternativ oder zusätzlich kann beim Hantieren die Orientierung des Werkstücks, beispielsweise durch Drehung um die Hochachse, verändert werden. Zum Hantieren des Werkstücks wird das Entnahmewerkzeug verwendet. Das Entnahmewerkzeug kann ein gesteuerter Abstoßmechanismus, eine Sortier- oder Kommisioniervorrichtung, ein Greifsystem, z.B. ein mechanischer, ein adhäsiver, insbesondere elektrostatischer, ein magnetischer, ein pneumatischer Greifer, insbesondere ein Sauggreifer oder Ähnliches sein. Das Entnahmewerkzeug kann auch eine Kombination der vorgenannten Einrichtungen umfassen. Typischerweise umfasst das Entnahmewerkzeug eine Vielzahl von Handhabungselementen zum Angreifen an dem Werkstück.

Der zumindest eine Parameter für das Entnahmewerkzeug kann eine der folgenden Informationen oder mehrere der folgenden Informationen in Kombination aufweisen:
- eine Information darüber, welche ausgewählten Handhabungselemente einer Vielzahl von Handhabungselementen des Entnahmewerkzeugs verwendet werden sollen; und/oder
- einen Betriebsparameter für das Entnahmewerkzeug, beispielsweise einen anzuwendenden Saugdruck, Pressdruck, Luftdruck, eine Greifkraft und/oder einen Ausrückweg.

Der Betriebsparameter kann sich auf alle oder einzelne, insbesondere einzelne der ausgewählten Handhabungselemente des Entnahmewerkzeugs beziehen.

Die zumindest eine Kenngröße aus dem zumindest einen Parameter kann eine der folgenden Größen oder mehrere der folgenden Größen in Kombination aufweisen:
- eine Hubkraft, die von dem Entnahmewerkzeug, auf das Werkstück ausgeübt werden wird;
- eine Information über den Angriffspunkt einer Resultierenden der Handhabungskräfte, insbesondere der Hubkräfte, einer Vielzahl von auf das Werkstück einwirkenden Handhabungselementen des Entnahmewerkzeugs;
- die Anzahl der auf das Werkstück einwirkenden Handhabungselemente des Entnahmewerkzeugs; und/oder
- ein um eine, insbesondere horizontal verlaufende, Kippachse wirkendes Drehmoment, welches beim Hantieren des Werkstücks mit dem gewählten Parameter für das Entnahmewerkzeug auf das Werkstück wirken wird, insbesondere wobei eine Gewichtskraft des Werkstücks bei der Berechnung des Drehmoments berücksichtigt wird oder wobei die Kippachse durch den Massenmittelpunkt des Werkstücks verläuft.

Die Werkstückinformation kann eine der folgenden Informationen oder mehrere der folgenden Informationen in Kombination aufweisen:
- eine Außenkontur des Werkstücks;
- Dicke, Gewicht bzw. Masse des Werkstücks;
- eine Angabe über die Position und/oder Orientierung des Werkstücks;
- eine zu erwartende Kraft, die überwunden werden muss, um das Werkstück aus einem Restgitter herauszulösen, wenn das Werkstück zuvor aus einem Blech geformt wurde; und/oder
- Neigung zum Verkanten des Werkstücks.

Typischerweise sind im Entnahmeergebnisspeicher eine Vielzahl von Entnahmeergebnissen gespeichert. Die Entnahmeergebnisse im Entnahmeergebnisspeicher können von Entnahmeversuchen des Entnahmewerkzeugs selbst stammen und/oder aus Entnahmeversuchen von vergleichbaren, insbesondere baugleichen, Entnahmewerkzeugen. Vor dem erstmaligen Durchlauf des erfindungsgemäßen Verfahrens kann eine Vielzahl von zuvor mit vergleichbaren, insbesondere baugleichen, Entnahmewerkzeugen ermittelten Entnahmeergebnissen in dem Entnahmeergebnisspeicher gespeichert werden. Die Vielzahl der Entnahmeergebnisse bezieht sich typischerweise auf Entnahmen verschiedenartiger Werkstücke, denen jeweils zumindest eine Werkstückinformation zugeordnet ist. Wenn ein neuartiges Werkstück entnommen werden soll, können zur Durchführung des Verfahrens die Entnahmeergebnisse von bekannten Werkstücken herangezogen werden, die nach ihrer Werkstückinformation mit dem neuartigen Werkstück vergleichbar sind.

Das erfindungsgemäße Verfahren wird vorzugsweise an einer unten beschriebenen erfindungsgemäßen Maschine durchgeführt.

Vorzugsweise wird vor dem Verfahrensschritt B) folgender Verfahrensschritt durchgeführt:
A) Formen des Werkstücks.

Das erfindungsgemäße Verfahren wird dadurch vorteilhaft in den Fertigungsprozess des Werkstücks integriert. Das Werkstück kann insbesondere aus einem Grundkörper, vorzugsweise aus einem Blech, geformt werden. Bevorzugt erfolgt das Formen durch Laserschneiden und/oder Stanzen. Formen kann darüber hinaus sein: Schneiden, insbesondere Wasserstrahl-, Plasma- oder Laserschneiden, Stanzen, Biegen, Nibbeln, etc.

Bevorzugt ist vorgesehen, dass im Verfahrensschritt F) ein Entnahmewerkzeug in Form eines Saugers eingesetzt wird und im Verfahrensschritt B) zumindest ein Parameter für das Entnahmewerkzeug in Form eines Saugers erzeugt wird. Ein Sauger eignet sich besonders zur flexiblen Handhabung unterschiedlicher Werkstücke, insbesondere wenn diese aus einem Blech geformt sind. Der Parameter für das Entnahmewerkzeug wird bevorzugt in Form eines Parameters für die Saugerplatzierung erzeugt; vorzugsweise werden mehrere Parameter erzeugt. Ein Entnahmewerkzeug in Form eines Saugers ist z.B. ein Sauggreifer. Bei diesem drückt der Umgebungsdruck das Werkstück gegen den Sauggreifer, sobald der umgebende Druck größer ist als der Druck zwischen Sauggreifer und Werkstück. Den Druckunterschied erreicht man, indem man den Sauggreifer an einen Unterdruck- oder Vakuum-Erzeuger anschließt. Dieser saugt die Luft zwischen Sauggreifer und Werkstück ab. Sobald der Sauggreifer die Werkstückoberfläche berührt und sie gegen den Umgebungsdruck abdichtet, wird ein Unterdruck erzeugt. Die Haltekraft ist umso größer, je höher die Druckdifferenz zwischen Umgebungsdruck und Druck im Sauggreifer ist, d.h. insbesondere je stärker der Druck zwischen dem Sauggreifer und dem Werkstück verringert wird.

Besonders bevorzugt ist vorgesehen, dass der im Verfahrensschritt F) eingesetzte Sauger mehrere Saugerpins aufweist und im Verfahrensschritt B) zumindest ein Parameter in Form eines Parameters für die Saugerpinansteuerung erzeugt wird. Dadurch kann der Sauger besonders gut auf das Werkstück abgestimmt werden. Vorzugsweise werden mehrere Parameter für das Entnahmewerkzeug erzeugt, insbesondere mehrere Parameter für die Saugerpinansteuerung. Der Parameter für die Saugerpinansteuerung kann eine Auswahl der Saugerpins des Saugers bestimmen, welche zum Hantieren des Werkstücks eingesetzt werden sollen. Alternativ oder zusätzlich kann ein Parameter für die Saugerpinansteuerung den zu erzeugenden Unterdruck für alle (ggf. alle zu verwendenden) Saugerpins gemeinsam oder für einzelne Saugerpins jeweils gesondert angeben. Ein Saugerpin kann auch als ein Saugnapf oder Saugnippel bezeichnet werden. Die mehreren Saugerpins sind typischerweise in mehreren Reihen an dem Sauger angeordnet.

Der Sauger dient dazu, das Werkstück zu transportieren und/oder das Werkstück aus einem Restgitter zu entnehmen, wenn das Werkstück aus einem Blech geformt wurde. Zusätzlich oder alternativ zu dem Entnahmewerkzeug in Form eines Saugers können weitere Entnahmewerkzeuge verwendet werden, beispielsweise Greifer und/oder Ausdrückpins (Druckzapfen oder Hubzapfen). Wenn das Werkstück aus einem Blech geformt wurde, kann der Sauger durch einen oder mehrere Ausdrückpins beim Entnehmen des Werkstücks aus einem Restgitter unterstützt werden. Alternativ kann mittels eines oder mehrerer Ausdrückpins das Werkstück aus dem Restgitter herausgedrückt werden, ggf. herausgebrochen werden; der Sauger kann dann das aus dem Restgitter herausgelöste Werkstück übernehmen. Die Ausdrückpins können ebenfalls parameterbasiert angesteuert werden, und insbesondere unabhängig von dem Sauger positioniert werden. Insbesondere kann das erfindungsgemäße Verfahren und seine weitergebildeten Varianten auch für die Ansteuerung der Ausdrückpins angewandt werden, etwa wobei der wenigstens eine Parameter deren Positionierung, Hubhöhe und/oder Hubkraft bestimmen kann.

Vorzugsweise erfolgt das Bestimmen der Kenngröße im Verfahrensschritt C) in Form eines Bestimmens einer indirekten Kenngröße aus dem zumindest einen Parameter und der zumindest einen Werkstückinformation. Eine vorteilhafte Weiterbildung dieser Verfahrensvariante sieht vor, dass der im Verfahrensschritt F) eingesetzte Sauger mehrere Saugerpins aufweist und im Verfahrensschritt B) zumindest ein Parameter in Form eines Parameters für die Saugerpinansteuerung erzeugt wird, und dass das Bestimmen der indirekten Kenngröße aus dem zumindest einen Parameter für die Saugerpinansteuerung und der zumindest einen Werkstückinformation erfolgt. Besonders bevorzugt werden mehrere indirekte Kenngrößen bestimmt. Eine indirekte Kenngröße ist nicht unmittelbar zugänglich, sondern kann aus anderen (direkten) Kenngrößen berechnet werden. Eine direkte Kenngröße kann beispielsweise die zweidimensionale Außenkontur des Werkstücks beschreiben. Beim Berechnen der indirekten Kenngröße können geometrische Zusammenhänge in geeigneter Weise vereinfacht werden. Typischerweise werden viele, z.B. ca. 50, indirekte Kenngrößen berechnet. Mithilfe von Algorithmen des Maschinellen Lernens ist es möglich, über Korrelationsanalysen die wichtigen Kenngrößen zu identifizieren. Dabei kann eine Datenauswertung, die auf einem Algorithmus zur Klassifizierung, insbesondere auf einem selbstverbessernden Algorithmus, basiert, Verwendung finden.

Eine Datenauswertung, die auf einem Algorithmus zur Klassifizierung, insbesondere auf einem selbstverbessernden Algorithmus, basiert, kann eine oder mehrere der folgenden Auswertungsschritte aufweisen:
a) eine datentechnische Verarbeitung von Eingangsdaten mit einem ersten Verarbeitungs-Datensatz und ersten Verarbeitungs-Algorithmen zu Zwischendaten;
b) insbesondere eine datentechnische Verarbeitung dieser und im Folgenden gewonnenen weiteren Zwischendaten mit weiteren Verarbeitungs-Datensätzen und weiteren Verarbeitungs-Algorithmen zu weiteren Zwischendaten;
c) Wiederholen des Schritts b) gemäß eines vorgegebenen Wiederhol-Algorithmus;
d) wobei die Verarbeitungs-Datensätze und Verarbeitungs-Algorithmen ermittelt werden mit Hilfe von Testdatensätzen, die aufweisen:
   - Eingangsdaten und
   - Werkstückinformationen, Kenngrößen und/oder Parameter und vorzugsweise
   - zugehörige Entnahmeprognosen (z.B. Entnahme erfolgreich/ nicht erfolgreich bzw. Entnahme wahrscheinlich / nicht wahrscheinlich)
e) wobei die Ermittlung der Verarbeitungs-Datensätze und Verarbeitungs-Algorithmen die folgenden Schritte umfasst:
   - Eingangsdaten der Testdatensätze einlesen,
   - Werkstückinformationen, Kenngrößen und/oder Parameter mit vorgegebenen Verarbeitungs-Datensätze und/oder Verarbeitungs-Algorithmen ermitteln,
   - die ermittelten mit den Werkstückinformationen, Kenngrößen und/oder Parameter mit den den eigelesenen Eingangsdaten zugeordneten Werkstückinformationen, Kenngrößen und/oder Parametern vergleichen,
   - die Verarbeitungs-Datensätze und/oder Verarbeitungs-Algorithmen anhand der Ergebnisse des Vergleichs und gemäß einem vorgegebenen Verbesserungs-Algorithmus verändern, und
   - die vorgenannten Schritte unter e) solange erneut ausführen, bis die aus den Eingangsdaten der Testdatensätze ermittelten Werkstückinformationen, Kenngrößen und/oder Parameter mit einer vorgegebenen Mindest-Übereinstimmungsrate mit denen aus den Testdatensätzen übereinstimmen.

Die Verarbeitungs-Datensätze können Datensätze mit Faktoren sein, wobei die Faktoren die zu verarbeitenden Daten je einzeln gewichten. Die Verarbeitungs-Algorithmen können arithmetisch, kombinatorisch und/oder logisch verarbeitende Algorithmen sein, die die zu verarbeitenden Daten gemäß der vorgegebenen Kombinatorik, Arithmetik und/oder Logik weiter verarbeiten.

Die Datenauswertung kann ferner ausgelegt sein, mehrere Verbesserungs-Algorithmen zu verwenden, und Verbesserungs-Algorithmen, die mit vorgegebenen Maßstäben schneller oder zuverlässiger zu einer vorgegebenen Übereinstimmungsziel kommen, bevorzugt einzusetzen. Die Datenauswertung kann ferner dazu ausgelegt sein, mehrere Verbesserungsalgorithmen zu verwenden, und Verbesserungsalgorithmen, die mit vorgegebenen Maßstäben schneller oder zuverlässiger zu einem vorgegebenen Übereinstimmungsziel kommen, bevorzugt einzusetzen. Die Datenauswertung kann ferner dazu ausgelegt sein, mehrere Wiederhol-Algorithmen zu verwenden, und Wiederhol-Algorithmen, die mit vorgegebenen Maßstäben schneller oder zuverlässiger zu einem vorgegebenen Übereinstimmungsziel kommen, bevorzugt einzusetzen.

In einigen Ausführungsformen kann das algorithmische Auswerten der Werkstückinformationen, Kenngrößen und/oder Parameter mit mindestens einem neuronalen Netzwerk durchgeführt werden. Dabei ist das neuronale Netzwerk für spezifische Werkstückinformationen, Kenngrößen und/oder Parameter in der industriellen Fertigungsstätte konfiguriert. Ferner kann es sich alternativ oder zusätzlich fortlaufend selbst verbessern. Die Werkstückinformationen, Kenngrößen und/oder Parameter sind digitale Eingangswerte des neuronalen Netzwerks und die Entnahmeergebnisse sind als digitale Ausgangsklassen im neuronalen Netzwerk abgebildet.

Die hierin offenbarten Konzepte ermöglichen es, dass das Hantieren eines Werkstücks zunehmend sicherer erfolgen kann. Die Anzahl der Stillstände der Maschinen kann drastisch verkleinert werden.

Weiter können automatisch aus den gesammelten Daten z.B. sogenannte Entscheidungsbäume generiert werden, also eine Abfolge von aufeinander folgenden Entscheidungen, in welchem Wertebereich die jeweilige Kenngröße liegen muss, um eine erfolgreiche Entnahme annehmen zu können. Durch die Verwendung indirekter Kenngrößen kann die Übertragbarkeit der Entnahmeergebnisse auf Werkstücke mit ähnlichen geometrischen Eigenschaften verbessert werden. Dies ermöglicht eine präzisere Entnahmeprognose.

Vorzugsweise basiert die indirekte Kenngröße auf
a) dem Verhältnis zwischen der Saugkraft der Saugerpins zu der Gewichtskraft des Werkstücks;
b) der Überdeckung der Werkstücksfläche mit der Fläche der Saugerpins;
c) dem Abstand zwischen dem Schwerpunkt der Saugerpins zum Schwerpunkt des Werkstücks; und/oder
d) dem Bestimmen der Voronoi-Flächen der Saugerpins.

Es hat sich gezeigt, dass mit diesen indirekten Kenngrößen besonders gute Entnahmeprognosen erstellt werden können. Eine Voronoi-Fläche kann durch eine Zerlegung einer Fläche, z.B. eines zu bearbeitenden Bleches, in Regionen bestimmt werden, wobei die Regionen durch eine vorgegebene Menge an Punkten der Fläche, hier als Zentren bezeichnet, definiert werden. Jede Region wird durch genau ein Zentrum bestimmt und umfasst alle Punkte der Fläche, die näher an dem Zentrum der Region liegen als an jedem anderen Zentrum. Derartige Regionen werden auch als Voronoi-Regionen bezeichnet. Aus allen Punkten, die mehr als ein nächstgelegenes Zentrum besitzen und somit die Grenzen der Regionen bilden, entsteht das Voronoi-Diagramm. Im Rahmen der vorliegenden Erfindung kann als die Vornoi-Fläche der Saugerpins die Gesamtheit der Voronoi-Regionen der (aktiven) Saugerpins herangezogen werden. Diese Voronoi-Fläche kann eine konvexe Hülle, welche durch die Saugerpins aufgespannt wird, definieren.

Bevorzugt ist vorgesehen, dass in den Verfahrensschritten D) und H) ein Entnahmeergebnisspeicher in Form eines serverbasierten oder cloudbasierten Entnahmeergebnisspeichers eingesetzt wird. Dadurch kann die Datenbasis, d.h. die Anzahl der Entnahmeergebnisse im Entnahmespeicher vergrößert werden. Dies erlaubt das Erstellen genauerer Entnahmeprognosen.

Ein serverbasierter Entnahmeergebnisspeicher kann ein Speicher sein, der ausgelegt ist, Daten insbesondere elektronisch abzulegen und bereitzustellen auf einer Datenablage, die Verbindung zu mehreren von der Datenablage entfernten Datenverarbeitungsvorrichtungen aufweist. Ein serverbasierter Entnahmeergebnisspeieher kann innerhalb oder außerhalb einer Organisationseinheit also z.B. einer Fabrik oder Firma angeordnet sein. Er kann ausschließlich im Zugriff dieser Organisationseinheit sein.

Ein cloudbasierter Entnahmeergebnisspeicher ist ein Entnahmeergebnisspeicher, der außerhalb der Organisationseinheit also z.B. einer Fabrik oder Firma angeordnet sein kann. Er ist ausgelegt als Datenspeicher für mehrere unabhängige Organisationseinheiten. Diese können sich Funktionen, wie z.B. die Datenablage und Datenverarbeitung teilen. Dabei können die abgelegten Daten mit voreinstellbarem Informationsgehalt auch von Dritten, insbesondere von einem Anbieter des cloudbasierten Entnahmeergebnisspeichers, weiterverarbeitet werden. Es können z.B. Informationen zu Werkstücken und zur Häufigkeit von erfolgreichen Entnahmen ausgelesen werden. Diese Entnahmeergebnisse können zur Erstellung von Entnahmeprognosen allen Nutzern des cloudbasierten Entnahmeergebnisspeichers zur Verfügung gestellt werden. Dies kann in unterschiedlich gestaffelter Vertraulichkeit, z.B. in Form anonymisierter Daten, erfolgen.

Vorzugsweise wird nach dem Verfahrensschritt E) bei negativer Entnahmeprognose das Verfahren ab Verfahrensschritt B) erneut durchgeführt. Dabei wird grundsätzlich ein neuer Wert des Parameters für das Entnahmewerkzeug bzw. ein anderer Parameter für das Entnahmewerkzeug verwendet. Dieses Prozedere kann so lange wiederholt werden, bis in dem Verfahrensschritt E) eine positive Entnahmeprognose erhalten wird. Besonders bevorzugt erfolgt das erneute Durchführen des Verfahrens ab Verfahrensschritt B) unter Berücksichtigung zumindest eines bereits verwendeten Parameters, zumindest einer bereits verwendeten Werkstückinformation und/oder zumindest einer bereits verwendeten Kenngröße. Auf diese Weise kann schneller ein Parameter mit einer positiven Entnahmeprognose ermittelt werden.

Es kann vorgesehen sein, dass das Detektieren des Entnahmeergebnisses im Verfahrensschritt G) durch zumindest einen Sensor erfolgt. Vorzugsweise erfolgt das Detektieren des Entnahmeergebnisses durch mehrere Sensoren. Der bzw. die Sensoren können beispielsweise ein Endlagenschalter, eine Kamera und/oder eine Lichtschranke sein. Auf diese Weise kann das Entnahmeergebnis besonders sicher detektiert werden.

In einem besonders einfachen Fall kann das Entnahmeergebnis digital "gut" oder "schlecht" sein. Daraus lässt sich eine Entnahmeprognose allgemein als Wahrscheinlichkeit berechnen. Es ist auch möglich, dass das Entnahmeergebnis als eine kontinuierliche oder schrittweise Aussage erfolgt und gespeichert wird, z.B "sehr gut", "gut", "schlecht", "erfolglos". Dem Entnahmeergebnis kann aber auch zusätzliche Information über die Art des Ergebnisses mit hinzugefügt werden, wie z.B.:
- "Trennung aus dem Restgitter: "erfolgreich", "erfolgreich mit mehrmaligen Versuchen", "nicht erfolgreich"",
- "Transport: "erfolgreich", "erfolgreich mit mehrmaligen Versuchen", "nicht erfolgreich"",
- "Drehung beim Transport: "erfolgreich", "erfolgreich mit mehrmaligen Versuchen", "nicht erfolgreich" und/oder
- "Ablage: "erfolgreich", "erfolgreich mit mehrmaligen Versuchen", "nicht erfolgreich"".

### Erfindungsgemäße Vorrichtungen

In den Rahmen der Erfindung fällt auch eine Maschine zum Durchführen eines erfindungsgemäßen Verfahrens.

Die Steuereinheit kann dazu ausgebildet sein, einen Parameter für das Entnahmewerkzeug zu erzeugen. Die Steuereinheit ist dazu ausgebildet, eine Entnahmeprognose unter Berücksichtigung der Kenngröße und zumindest eines Entnahmeergebnisses aus dem Entnahmeergebnisspeichers zu erstellen. Ferner ist die Steuereinheit dazu ausgebildet, die Entnahmeprognose zu bewerten. Weiter ist die Steuereinheit dazu ausgebildet, das Entnahmewerkzeug zur Entnahme des Werkstücks im Fall einer positiven Entnahmeprognose anzusteuern. Mit anderen Worten führt die Maschine im Fall einer positiven Entnahmeprognose einen Entnahmevorgang mit dem Parameter für das Entnahmewerkzeug durch. Mit einer solchen Maschine kann das erfindungsgemäße Verfahren besonders vorteilhaft durchgeführt werden.

Die Maschine kann eine Werkzeugmaschine zum Formen des Werkstücks aufweisen. Die Werkzeugmaschine ist vorzugsweise in Form eines Laserschneid-Werkzeugmaschine und/oder einer Stanz-Werkzeugmaschine ausgebildet. Bei einer solchen Maschine kann das erfindungsgemäße Verfahren besonders elegant in den Fertigungsprozess integriert werden.

Das Entnahmewerkzeug kann einen Sauger aufweisen. Die Maschine eignet sich dann insbesondere zur Durchführung eines Verfahrens bei dem ein Entnahmewerkzeug in Form eines Saugers eingesetzt wird. Ein Sauger ist besonders zum Hantieren von Werkstücken, die aus einem Blech gefertigt wurden geeignet. Bevorzugt weist der Sauger mehrere Saugerpins auf. Ein Sauger mit mehreren Saugerpins kann besonders gut auf unterschiedliche Werkstücke, insbesondere auf Werkstücke mit komplexer Geometrie abgestimmt werden, indem die Saugerpins mittels eines Parameters für die Saugerpinansteuerung angesteuert werden. Der Parameter für die Saugerpinansteuerung kann insbesondere im Verfahrensschritt B) eines oben beschriebenen erfindungsgemäßen Verfahrens erzeugt werden.

Alternativ oder zusätzlich zu dem Sauger kann das Entnahmewerkzeug beispielsweise einen Greifer und/oder Ausdrückpins (Druckzapfen oder Hubzapfen) umfassen. Wenn das Werkstück aus einem Blech geformt wurde, kann der Sauger durch einen oder mehrere Ausdrückpins beim Entnehmen des Werkstücks aus einem Restgitter des Blechs unterstützt werden. Alternativ kann mittels eines oder mehrerer Ausdrückpins das Werkstück aus dem Restgitter herausgedrückt werden, ggf. herausgebrochen werden; der Sauger kann dann das aus dem Restgitter herausgelöste Werkstück übernehmen. Die Ausdrückpins können ebenfalls parameterbasiert angesteuert werden, und insbesondere unabhängig von dem Sauger positioniert werden. Ein Parameter zur Steuerung der Ausdrückpins kann deren Positionierung, Hubhöhe und/oder Hubkraft bestimmen. Greifer können die folgende Technologie je einzeln oder in Kombination aufweisen:
- mechanische Kräfte, z.B. in Form von einer mechanisch nachgebildeten Hand,
- elektrostatische Kräfte,
- magnetische Kräfte.

Alternativ oder zusätzlich zu dem Sauger, dem Greifer und/oder den Ausdrückpins kann das Entnahmewerkzeug eine steuerbare Abwurfvorrichtung aufweisen, in die das Werkstück sortiert abgeworfen wird. Diese kann z.B. eine steuerbare Rutsche oder eine steuerbare Beschleunigungsvorrichtung aufweisen.

Der Entnahmeergebnisspeicher der Maschine kann serverbasiert oder cloudbasiert ausgebildet sein. Mit serverbasierter Speicher ist hier ein Speicher gemeint, der auf einem Server abgelegt ist, auf den nur eine Fabrikationseinheit (Unternehmen, Organisationseinheit), insbesondere an einem Fabrikationsstandort Zugriff hat. Dieser weist den Vorteil auf, dass die auf ihm abgelegten Daten bei der Fabrikationseinheit verbleiben und nicht mit anderen Fabrikationseinheiten ausgetauscht werden. Ein serverbasierter Entnahmeergebnisspeicher der Maschine kann vorteilhaft in die Maschine integriert werden, z.B. in die Steuereinheit. Eine solche Maschine kann das erfindungsgemäße Verfahren unabhängig von weiterer Infrastruktur durchführen. Ein mit mehreren Fabrikationseinheiten bzw. Standorten verknüpfter (cloudbasierter) Entnahmeergebnisspeicher vereinfacht den Austausch von Entnahmeergebnissen mit anderen Maschinen und insbesondere mit anderen Fabrikationseinheiten. Es kann so auf eine viel größere Zahl von Entnahmeergebnissen und Kenngrößen zugegriffen werden. Die Daten können anonymisiert, d.h. ohne Information über die Fabrikationseinheiten abgelegt werden. So entstehen den Fabrikationseinheiten keine Nachteile und es können keine wettbewerbswidrigen Daten zwischen Wettbewerbern ausgetauscht werden. Insbesondere kann eine Maschine mit einem cloudbasierten Entnahmeergebnisspeicher mehrere Werkzeugmaschinen mit jeweils einem Parameter-gesteuerten Entnahmewerkzeug umfassen. Ein cloudbasierter Entnahmeergebnisspeicher kann örtlich entfernt von mehreren nicht miteinander verbundenen Unternehmen (Fabrikationseinheiten) angeordnet sein.

Die Maschine kann zumindest einen Sensor zum Detektieren des Entnahmeergebnisses aufweisen. Vorzugsweise weist die Maschine mehrere Sensoren zum Detektieren des Entnahmeergebnisses auf. Der bzw. die Sensoren können beispielsweise ein Endlagenschalter, eine Kamera und/oder eine Lichtschranke sein.

Die Steuereinheit ist typischerweise dazu ausgebildet, mittels des Sensors bzw. der Sensoren das Entnahmeergebnis zu detektieren und das Entnahmeergebnis im Entnahmeergebnisspeicher zu speichern.

Die hierin vorgeschlagenen Vorrichtungen und/oder Verfahren können es erlauben, die korrekte Erkenntnis des Hantierens mit einer erhöhten Genauigkeit zu gewinnen. Sie können insbesondere in einem Fertigungssteuerungssystem verwendet werden. Das Fertigungssteuerungssystem kann ein MES (Manufacturing Execution System) umfassen. Das MES kann ausgelegt sein, mit einem oder mehreren in einer Fertigungshalle positionierten manuellen Arbeitsplätzen oder automatisierten Arbeitsplätzen, z. B. Werkzeugmaschinen, über kabellose oder kabelgebundene Kommunikationsverbindungen verbunden zu werden. Allgemein kann das MES der Steuerung von Prozessabläufen/Fertigungsschritten bei der industriellen Fertigung von Werkstücken mit den Arbeitsplätzen dienen. Dazu kann das MES Informationen über die Prozessabläufe/Fertigungsschritte sowie Statusinformation der Arbeitsplätze empfangen. Das MES kann in einer Datenverarbeitungsvorrichtung implementiert sein. Bei dieser kann es sich um eine einzelne elektronische Datenverarbeitungsvorrichtung (Server) oder um einen Verbund von mehreren Datenverarbeitungsvorrichtungen (Serververbund/Cloud) handeln. Die Datenverarbeitungsvorrichtung oder der Verbund kann örtlich in der Fertigungsstätte vorgesehen werden oder außerhalb dezentral aufgebaut werden.

Weitere Vorteile und vorteilhafte Ausgestaltungen des Gegenstands der Erfindung ergeben sich aus der Beschreibung, den Ansprüchen und der Zeichnung. Die vorstehend genannten und die noch weiter aufgeführten Merkmale können je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Es zeigen:
- Fig. 1: eine schematische Darstellung einer erfindungsgemäßen Maschine mit einem Parameter-gesteuerten Entnahmewerkzeug und einem cloudbasierten Entnahmeergebnisspeicher; und
- Fig. 2: einen schematischen Ablaufplan eines erfindungsgemäßen Verfahrens.

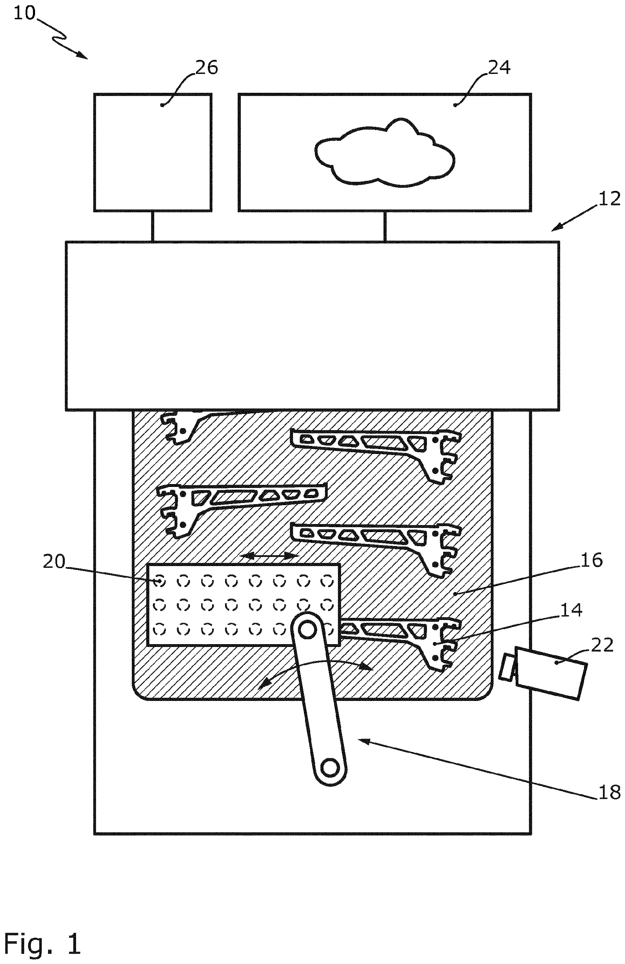

**Fig. 1** zeigt eine erfindungsgemäße Maschine **10** in einer stark schematisierten Darstellung. Die Maschine 10 umfasst eine Werkzeugmaschine **12.** Die Werkzeugmaschine 12 ist hier als eine Laserschneidmaschine ausgebildet. Mittels der Werkzeugmaschine 12 werden Werkstücke **14** aus einem Grundköper **16** geformt. Hier werden die Werkstücke 14 aus dem Grundkörper 16 in Form eines Blechs herausgeschnitten.

Die Maschine 10 umfasst weiterhin ein Entnahmewerkzeug **18.** Das Entnahmewerkzeug 18 ist hier als ein Sauger ausgebildet, der mehrere Saugerpins **20** aufweist. Die Saugerpins 20 (Saugnäpfe) sind hier in einer regelmäßigen Matrix angeordnet, insbesondere befinden sie sich hier in parallel bzw. orthogonal zueinander verlaufenden, äquidistanten Reihen.

Das Entnahmewerkzeug 18 ist Parameter-gesteuert. Mittels zumindest eines Parameters für das Entnahmewerkzeug 18 kann dessen Position relativ zu dem Grundkörper 16 und den unmittelbar nach der Fertigung in diesem befindlichen Werkstücken 14 eingestellt werden, vgl. die Doppelpfeile in Fig. 1. Zudem kann über einen Parameter für das Entnahmewerkzeug 18 ausgewählt werden, welche der Saugerpins 20 zum Entnehmen eines konkreten Werkstücks 14 verwendet werden sollen. Je nach Orientierung der Werkstücke 14 kann es trotz gleicher Form der Werkstücke 14 erforderlich sein, andere Saugerpins 20 zum Entnehmen eines konkreten Werkstücks 14 zu verwenden. Mittels eines weiteren Parameters kann der auf die Saugerpins 20 anzuwendende Unterdruck eingestellt werden. Der Unterdruck kann insbesondere in Abhängigkeit vom Gewicht des Werkstücks 14 und der Anzahl der im Eingriff mit dem Werkstück 14 befindlichen Saugerpins 20 gewählt werden.

Die Maschine 10 umfasst auch einen Sensor **22.** Der Sensor 22 ist hier als eine Kamera ausgebildet. Die Kamera ist auf den Grundkörper 16 mit den Werkstücken 14 gerichtet. Nach der Entnahme eines der Werkstücke 14 kann durch geeignete Bildverarbeitungsalgorithmen anhand des Bildes der Kamera erkannt werden, dass das Werkstück 14 nicht mehr im Grundkörper 16 angeordnet ist, d.h. dass die Entnahme erfolgreich war. Ebenso kann erkannt werden, wenn das Werkstück 14 nach einem Entnahmeversuch noch in dem Grundkörper 16 verblieben ist, d.h. dass die Entnahme nicht erfolgreich war. Dieses Entnahmeergebnis kann zusammen mit Informationen zu dem Werkstück 14 und dem Parameter bzw. den Parametern für das Entnahmewerkzeug 18 in einem Entnahmeergebnisspeicher **24** der Maschine 10 gespeichert werden. Der Entnahmeergebnisspeicher 24 ist hier cloudbasiert, d.h. als ein Cloudspeicher, ausgebildet.

Die Maschine weist ferner eine Steuereinheit **26** auf. Die Steuereinheit 26 ist mit dem Entnahmewerkzeug 18 und dem Entnahmeergebnisspeicher 24 verbunden. Mit anderen Worten kann die Steuereinheit 26 das Entnahmewerkzeug 18 ansteuern und Daten aus dem Entnahmeergebnisspeicher 24 abrufen und typischerweise auch Daten in dem Entnahmeergebnisspeicher 24 ablegen.

Die Steuereinheit 26 dient zur Verarbeitung zumindest eines Parameters für das Entnahmewerkzeug 18 und zumindest einer Werkstückinformation zu einer Kenngröße. Mit anderen Worten ist die Steuereinheit 26 dazu eingerichtet, aus dem Parameter für das Entnahmewerkzeug 18 und der Werkstückinformation eine Kenngröße zu berechnen. Der Parameter für das Entnahmewerkzeug 18 kann von der Steuereinheit 26 selbst erzeugt werden oder ihr von außen zugeführt werden, beispielsweise von einem Bediener der Maschine 10 oder von einem Leitrechner (nicht dargestellt).

Die Steuereinheit 26 ist ferner dazu eingerichtet, eine Entnahmeprognose für eines der Werkstücke 14 zu erstellen und zu bewerten. Zum Erstellen der Entnahmeprognose zieht die Steuereinheit 26 die zuvor ermittelte Kenngröße und zumindest ein Entnahmeergebnis aus dem Entnahmeergebnisspeicher 24 heran. Die Steuereinheit 26 kann dabei insbesondere berücksichtigen, wie groß der Wert derselben oder einer vergleichbaren Kenngröße bei dem Entnahmeergebnis aus dem Entnahmeergebnisspeicher 24 war, und ob die gespeicherte Entnahme erfolgreich war oder nicht. Zum Bewerten der Entnahmeprognose kann die Steuereinheit 26 den Wert der ermittelten Kenngröße und den Wert der Kenngröße aus dem Entnahmeergebnisspeicher 24 vergleichen. Wenn beispielsweise die gespeicherte Entnahme erfolgreich war, und die Kenngröße mit steigender Erfolgswahrscheinlichkeit für die Entnahme zunimmt, kann die Steuereinheit 26 die Entnahmeprognose als positiv bewerten, wenn der Wert der ermittelten Kenngröße größer ist als der Wert der Kenngröße aus dem Entnahmeergebnisspeicher 24.

Die Steuereinheit 26 ist weiterhin dazu eingerichtet, das Entnahmewerkzeug 18 mit dem Parameter anzusteuern, wenn die Entnahmeprognose positiv war, um das Werkstück 14 zu entnehmen. Der Sensor 22 kann wie oben ausgeführt das Entnahmeergebnis dieses Entnahmeversuchs erfassen und zum Speichern in dem Entnahmeergebnisspeicher 24 bereitstellen. Die Steuereinheit 26 kann beim Erfassen des Entnahmeergebnisses mitwirken, beispielsweise indem sie die erforderlichen Auswertealgorithmen auf die Daten des Sensors 22, hier das Bild der Kamera, anwendet. Die Steuereinheit 26 legt dann das Entnahmeergebnis zusammen mit dem Parameter für das Entnahmewerkzeug 18 und einer Werkstückinformation zu dem Werkstück 14 in dem Entnahmeergebnisspeicher 24 ab.

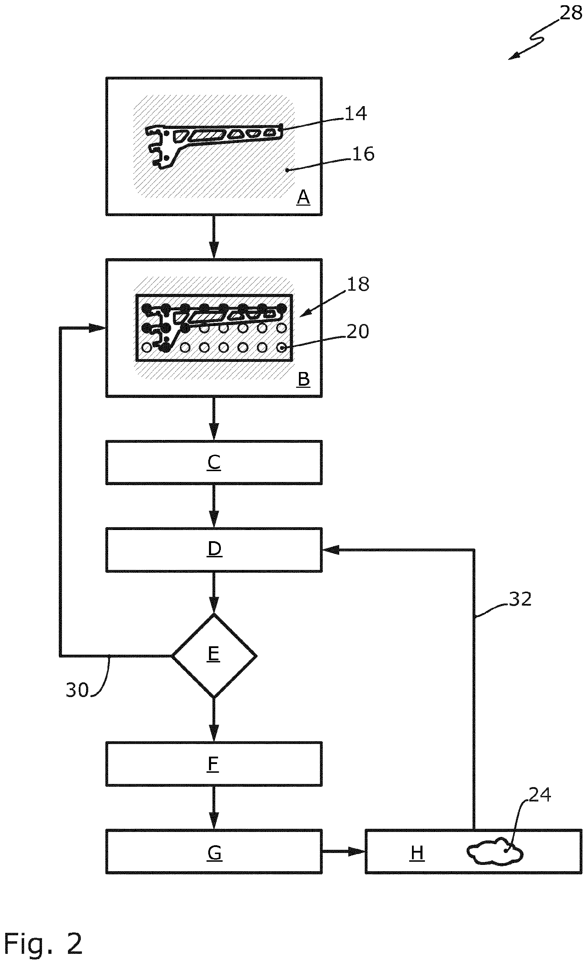

**Fig. 2** zeigt ein Ablaufschema eines erfindungsgemäßen Verfahrens **28.** Das Verfahren 28 kann mit der in Fig. 1 dargestellten Maschine 10 durchgeführt werden. In einem ersten Verfahrensschritt **A** wird ein Werkstück 14 geformt, beispielsweise mittels der Werkzeugmaschine 12 von Fig. 1. Sodann wird in einem Verfahrensschritt **B** zumindest ein Parameter für das Entnahmewerkzeug 18 erzeugt. In der dargestellten Verfahrensvariante werden mehrere Parameter für das Entnahmewerkzeug 18 erzeugt. Diese Parameter beschreiben hier die Positionierung des Saugers des Entnahmewerkzeugs 18 über dem Werkstück 14 und die Aktivierung der Saugerpins 20 des Saugers. In Fig. 2 sind aktivierte Saugerpins 20 schwarz ausgefüllt dargestellt; nicht aktivierte Saugerpins 20 erscheinen als leere Kreise.

In einem anschließenden Verfahrensschritt **C** wird aus den Parametern für das Entnahmewerkzeug 18 und einer Werkstückinformation eine Kenngröße bestimmt. Die Kenngröße ist hier eine indirekte Kenngröße und gibt die Überdeckung der Werkstücksfläche des Werkstücks 14 mit der Fläche der aktivierten Saugerpins 20 an.

Aus dieser Kenngröße wird in einem darauffolgenden Verfahrensschritt **D** eine Entnahmeprognose bestimmt. Dabei wird der Einfluss **32** zumindest eines Entnahmeergebnisses aus dem Entnahmeergebnisspeicher 24 berücksichtigt. Mit anderen Worten werden der Wert derselben oder einer vergleichbaren Kenngröße und das Ergebnis einer gespeicherten Entnahme zum Ermitteln der Entnahmeprognose herangezogen. Typischerweise wird eine Vielzahl von gespeicherten Entnahmen berücksichtigt. Dann kann vorzugsweise beim Erstellen der Entnahmeprognose eine Wahrscheinlichkeit für eine erfolgreiche Entnahme mit den gewählten Parametern für das Entnahmewerkzeug 18 berechnet werden.

Sodann wird die Entnahmeprognose in einem Verfahrensschritt **E** bewertet. Wenn die Entnahmeprognose eine Wahrscheinlichkeit für eine erfolgreiche Entnahme angibt, kann dabei überprüft werden, ob diese Wahrscheinlichkeit über einem Grenzwert liegt. Alternativ kann überprüft werden, ob die Entnahmeprognose sich mit "Entnahme wird voraussichtlich erfolgreich sein" zusammenfassen lässt.

Im Falle einer negativen Entnahmeprognose **30** wird das Verfahren ab dem Verfahrensschritt B wiederholt. Dabei wird zumindest einer der Parameter für das Entnahmewerkzeug 18 verändert. Vorzugsweise wird für die Veränderung des Parameters für das Entnahmewerkzeug 18 ein historischer Parameter aus dem Entnahmeergebnisspeicher 24 berücksichtigt, bei dem die Entnahme erfolgreich war. Beispielsweise kann ein größerer Unterdruck für die Saugerpins 20 vorgesehen werden, wenn sich aus den erfolgreichen Entnahmen im Entnahmeergebnisspeicher 24 ergibt, dass eine größere Haltekraft des Entnahmewerkzeugs 18 erforderlich ist.

Wenn die Entnahmeprognose positiv ist, wird in einem Verfahrensschritt **F** eine Entnahme des Werkstücks 14 mit den gewählten Parametern für das Entnahmewerkzeug 18 durchgeführt. In einem anschließenden Verfahrensschritt **G** wird das Entnahmeergebnis festgestellt, beispielsweise mittels des Sensors 22 detektiert. Dieses Entnahmeergebnis wird sodann in einem Verfahrensschritt **H** zusammen mit den angewandten Parametern für das Entnahmewerkzeug 18 und zumindest einer Werkstückinformation in dem Entnahmeergebnisspeicher 24 gespeichert. Der Entnahmeergebnisspeicher 24 umfasst sodann eine vergrößerte Datenbasis, welche zum Erstellen einer Entnahmeprognose bei einem erneuten Durchlauf des erfindungsgemäßen Verfahrens Im Verfahrensschritt E herangezogen werden kann. Mit anderen Worten kann nun der Einfluss 32 des Entnahmeergebnisses des im Rahmen des erfindungsgemäßen Verfahrens durchgeführten Entnahmevorgangs beim Erstellen der Entnahmeprognose im Verfahrensschritt E eines erneuten Ablaufs des erfindungsgemäßen Verfahrens berücksichtigt werden. Die Zuverlässigkeit bzw. Genauigkeit der Entnahmeprognose steigt dadurch mit jedem Verfahrensdurchlauf.

## Patentansprüche

1. Verfahren (28) zum Hantieren eines Werkstücks (14) mit Hilfe eines Entnahmewerkzeugs (18), mit den Verfahrensschritten:
B) Erzeugen zumindest eines Parameters für das Entnahmewerkzeug (18);
C) Bestimmen zumindest einer Kenngröße aus dem zumindest einen Parameter und zumindest einer Werkstückinformation;
D) Erstellen einer Entnahmeprognose unter Berücksichtigung der Kenngröße und zumindest eines Entnahmeergebnisses aus einem Entnahmeerqebnisspeicher (24), wobei die Entnahmeprognose die Wahrscheinlichkeit einer erfolgreichen Entnahme angibt, und wobei die zumindest eine Kenngröße, welche in Verfahrensschritt C) ermittelt wurde, mit einer entsprechenden Kenngröße des zumindest einen Entnahmeergebnisses aus dem Entnahmeergebnisspeicher verglichen wird;
E) Bewerten der Entnahmeprognose;
F) Entnahme des Werkstücks (14) bei positiver Entnahmeprognose, wobei das Entnahmewerkzeug (18) durch den zumindest einen Parameter gesteuert wird;
G) Detektieren des Entnahmeergebnisses;
H) Speichern des Entnahmeergebnisses im Entnahmeergebnisspeicher (24), wobei das Entnahmeergebnis zusammen mit den angewandten Parametern für das Entnahmewerkzeug (18) und zumindest einer Werkstückinformation in dem Entnahmeergebnisspeicher (24) gespeichert wird.

2. Verfahren nach Anspruch 1, bei dem vor dem Verfahrensschritt B) folgender Verfahrensschritt durchgeführt wird:
A) Formen des Werkstücks (14).

3. Verfahren nach Anspruch 1 oder 2, bei dem im Verfahrensschritt F) ein Entnahmewerkzeug (18) in Form eines Saugers eingesetzt wird und im Verfahrensschritt B) zumindest ein Parameter für das Entnahmewerkzeug (18) in Form eines Saugers erzeugt wird.

4. Verfahren nach Anspruch 3, bei dem der im Verfahrensschritt F) eingesetzte Sauger mehrere Saugerpins (20) aufweist und im Verfahrensschritt B) zumindest ein Parameter in Form eines Parameters für die Saugerpinansteuerung erzeugt wird.

5. Verfahren nach einem der vorhergehenden Ansprüche, bei dem das Bestimmen der Kenngröße im Verfahrensschritt C) in Form eines Bestimmens einer indirekten Kenngröße aus dem zumindest einen Parameter und der zumindest einen Werkstückinformation erfolgt.

6. Verfahren nach Anspruch 5 in Verbindung mit Anspruch 4, bei dem das Bestimmen der indirekten Kenngröße aus dem zumindest einen Parameter für die Saugerpinansteuerung und der zumindest einen Werkstückinformation erfolgt.

7. Verfahren nach Anspruch 6, wobei die indirekte Kenngröße auf
a) dem Verhältnis zwischen der Saugkraft der Saugerpins (20) zu der Gewichtskraft des Werkstücks (14);
b) der Überdeckung der Werkstücksfläche mit der Fläche der Saugerpins (20);
c) dem Abstand zwischen dem Schwerpunkt der Saugerpins (20) zum Schwerpunkt des Werkstücks (14); und/oder
d) dem Bestimmen der Voronoi-Flächen der Saugerpins (20);
basiert.

8. Verfahren nach einem der vorhergehenden Ansprüche, bei dem in den Verfahrensschritten D) und H) ein Entnahmeergebnisspeicher (24) in Form eines serverbasierten oder cloudbasierten Entnahmeergebnisspeichers (24) eingesetzt wird.

9. Verfahren nach einem der vorhergehenden Ansprüche, bei dem nach dem Verfahrensschritt E) bei negativer Entnahmeprognose das Verfahren ab Verfahrensschritt B) erneut durchgeführt wird.

10. Verfahren nach Anspruch 9, bei dem das erneute Durchführen des Verfahrens ab Verfahrensschritt B) unter Berücksichtigung zumindest eines bereits verwendeten Parameters, zumindest einer bereits verwendeten Werkstückinformation und/oder zumindest einer bereits verwendeten Kenngröße erfolgt.

11. Verfahren nach einem der vorhergehenden Ansprüche, bei dem das Detektieren des Entnahmeergebnisses im Verfahrensschritt G) durch zumindest einen Sensor (22) erfolgt.

12. Maschine (10) zum Durchführen eines Verfahrens (28) nach einem der vorhergehenden Ansprüche, wobei die Maschine (10) Folgendes aufweist:
i) ein Parameter-gesteuertes Entnahmewerkzeug (18);
ii) einen Entnahmeergebnisspeicher (24) zum Speichern von Entnahmeergebnissen;
iii) eine mit dem Entnahmewerkzeug (18) und dem Entnahmeergebnisspeicher (24) verbundene Steuereinheit (26) eingerichtet zur Verarbeitung zumindest eines Parameters für das Entnahmewerkzeug (18) und einer Werkstückinformation zu einer Kenngröße;
wobei die Steuereinheit (26) dazu ausgebildet ist, eine Entnahmeprognose unter Berücksichtigung der Kenngröße und zumindest eines Entnahmeergebnisses aus dem Entnahmeergebnisspeichers (24) zu erstellen, wobei die Entnahmeprognose die Wahrscheinlichkeit einer erfolgreichen Entnahme angibt, und
wobei die Steuereinheit (26) dazu ausgebildet ist
die Kenngröße mit einer entsprechenden Kenngröße des zumindest einen Entnahmeergebnisses aus dem Entnahmeergebnisspeicher zu vergleichen;
wobei die Steuereinheit (26) dazu ausgebildet ist, die Entnahmeprognose zu bewerten;
wobei die Steuereinheit (26) dazu ausgebildet ist, das Entnahmewerkzeug (18) zur Entnahme des Werkstücks (14) im Fall einer positiven Entnahmeprognose anzusteuern; wobei die Steuereinheit (26) dazu ausgebildet ist, das Entnahmeergebnis zusammen mit dem Parameter für das Entnahmewerkzeug (18) und der Werkstückinformation zu einem Werkstück (14) in dem Entnahmeergebnisspeicher abzulegen.

13. Maschine nach Anspruch 12, insbesondere zum Durchführen eines Verfahrens nach Anspruch 2, bei der die Maschine (10) eine Werkzeugmaschine (12) zum Formen des Werkstücks (14) aufweist.

14. Maschine nach einem der Ansprüche 12 oder 13, insbesondere zum Durchführen eines Verfahrens nach Anspruch 3, bei der das Entnahmewerkzeug (18) einen Sauger aufweist.

15. Maschine nach Anspruch 14, insbesondere zum Durchführen eines Verfahrens nach Anspruch 4, bei der der Sauger mehrere Saugerpins (20) aufweist.

## Claims

1. A method (28) for handling a workpiece (14) with the aid of a removal tool (18), comprising the method steps:
B) generating at least one parameter for the removal tool (18);
C) determining at least one characteristic from the at least one parameter and at least one item of workpiece information;
D) creating a removal prediction taking into account the characteristic and at least one removal result from a removal result memory (24), wherein the removal prediction indicates the probability of a successful removal, and wherein the at least one characteristic, which was determined in method step C), is compared with a corresponding characteristic of the at least one removal result from the removal result memory;
E) evaluating the removal prediction;
F) removing the workpiece (14) when the removal prediction is positive, wherein the removal tool (18) is controlled by the at least one parameter;
G) detecting the removal result;
H) storing the removal result in the removal result memory (24), wherein the removal result is stored in the removal result memory (24) together with the applied parameters for the removal tool (18) and at least one item of workpiece information.

2. The method according to claim 1, in which the following method step is carried out before method step B):
A) forming the workpiece (14).

3. The method according to claim 1 or 2, in which in method step F) a removal tool (18) in the form of a suction tool is used and in method step B) at least one parameter for the removal tool (18) in the form of a suction tool is generated.

4. The method according to claim 3, in which the suction tool used in method step F) has a plurality of suction pins (20) and in method step B) at least one parameter in the form of a parameter for the suction pin control is generated.

5. The method according to any one of the preceding claims, in which the characteristic is determined in method step C) in the form of determining an indirect characteristic from the at least one parameter and the at least one item of workpiece information.

6. The method according to claim 5 in conjunction with claim 4, in which the indirect characteristic is determined from the at least one parameter for the suction pin control and the at least one item of workpiece information.

7. The method according to claim 6, wherein the indirect characteristic is based on
a) the ratio between the suction force of the suction pins (20) and the weight force of the workpiece (14);
b) the overlap of the workpiece surface with the surface of the suction pins (20);
c) the distance between the centre of gravity of the suction pins (20) and the centre of gravity of the workpiece (14); and/or
d) determining the Voronoi areas of the suction pins (20).

8. The method according to any one of the preceding claims, in which a removal result memory (24) in the form of a server-based or cloud-based removal result memory (24) is used in method steps D) and H).

9. The method according to any one of the preceding claims, in which, after method step E) in the event of a negative removal prediction, the method is carried out again from method step B).

10. The method according to claim 9, in which the method is carried out again from method step B) taking into account at least one parameter that has already been used, at least one item of workpiece information that has already been used and/or at least one characteristic that has already been used.

11. The method according to any one of the preceding claims, in which the removal result is detected in method step G) by at least one sensor (22).

12. A machine (10) for performing a method (28) according to any one of the preceding claims, wherein the machine (10) comprises:
i) a parameter-controlled removal tool (18);
ii) a removal result memory (24) for storing removal results;
iii) a control unit (26) connected to the removal tool (18) and the removal result memory (24) and configured to process at least one parameter for the removal tool (18) and an item of workpiece information to form a characteristic;
wherein the control unit (26) is designed to create a removal prediction taking into account the characteristic and at least one removal result from the removal result memory (24), wherein the removal prediction indicates the probability of a successful removal, and
wherein the control unit (26) is designed to compare the characteristic with a corresponding characteristic of the at least one removal result from the removal result memory;
wherein the control unit (26) is designed to evaluate the removal prediction;
wherein the control unit (26) is designed to control the removal tool (18) to remove the workpiece (14) in the event of a positive removal prediction; wherein the control unit (26) is designed to store the removal result together with the parameter for the removal tool (18) and the item of workpiece information about a workpiece (14) in the removal result memory.

13. The machine according to claim 12, in particular for carrying out a method according to claim 2, in which the machine (10) has a machine tool (12) for forming the workpiece (14).

14. The machine according to any one of claims 12 or 13, in particular for carrying out a method according to claim 3, in which the removal tool (18) has a suction tool.

15. The machine according to claim 14, in particular for carrying out a method according to claim 4, in which the suction tool has a plurality of suction pins (20).

## Revendications

1. Procédé (28) de manipulation d'une pièce (14) à l'aide d'un outil de retrait (18) comportant les étapes du procédé suivantes:
B) la génération d'au moins un paramètre pour l'outil de retrait (18);
C) la détermination d'au moins une grandeur à partir de l'au moins un paramètre et d'au moins une information d'outil;
D) la création d'une prévision de retrait prenant en compte la grandeur et l'au moins un résultat de retrait à partir d'une mémoire de résultats de retrait (24), dans lequel la prévision de retrait indique la probabilité d'un retrait réussi, et dans lequel l'au moins une grandeur, laquelle a été déterminée dans l'étape du procédé C), est comparée avec une grandeur correspondante de l'au moins un résultat de retrait à partir de la mémoire de résultats de retrait;
E) l'évaluation des prévisions de retrait;
F) retrait de la pièce (14) en cas de prévision positive de retrait, dans lequel l'outil de retrait (18) est commandé par l'au moins un paramètre;
G) la détection du résultat de retrait;
H) la sauvegarde du résultat de retrait dans la mémoire de résultat de retrait (24), dans lequel le résultat de retrait est sauvegardé dans la mémoire de résultat de retrait (24) avec les paramètres utilisés pour l'outil de retrait (18) et au moins une information de pièce.

2. Procédé selon la revendication 1, dans lequel, avant l'étape du procédé B), l'étape du procédé suivante est mise en œuvre:
A) le formage de la pièce (14).

3. Procédé selon la revendication 1 ou 2, dans lequel, lors de l'étape du procédé F), un outil de retrait (18) sous la forme d'une ventouse est utilisé et dans l'étape du procédé B), l'au moins un paramètre pour l'outil de retrait (18) sous la forme d'une ventouse est généré.

4. Procédé selon la revendication 3, dans lequel la ventouse utilisée dans l'étape du procédé F) comporte plusieurs broches de ventouse (20) et dans l'étape du procédé B), au moins un paramètre sous la forme d'un paramètre pour la commande de broche de ventouse est généré.

5. Procédé selon l'une quelconque des revendications précédentes, dans lequel la détermination de la grandeur dans l'étape du procédé C) est effectuée sous la forme d'une détermination d'une grandeur indirecte à partir de l'au moins un paramètre et de l'au moins une information de pièce.

6. Procédé selon la revendication 5 en liaison avec la revendication 4, dans lequel la détermination de la grandeur indirecte est effectuée à partir de l'au moins un paramètre pour la commande de broche de ventouse et de l'au moins une information de pièce.

7. Procédé selon la revendication 6, dans lequel la grandeur indirecte est basée sur
a) le rapport entre la force d'aspiration des broches de ventouse (20) et le poids de la pièce (14);
b) le chevauchement de la surface de pièce avec la surface des broches de ventouse (20);
c) la distance entre le centre de gravité des broches de ventouse (20) et le centre de gravité de la pièce (14); et/ou
d) la détermination des surfaces de Voronoi des broches de ventouse (20).

8. Procédé selon l'une quelconque des revendications précédentes, dans lequel, dans les étapes du procédé D) et H), une mémoire de résultats de retrait (24) est utilisée sous la forme d'une mémoire de résultats de retrait (24) basée sur un serveur ou sur le nuage.

9. Procédé selon l'une quelconque des revendications précédentes, dans lequel, après l'étape du procédé E) en cas de prévision négative de retrait, le procédé est mis en œuvre à nouveau à partir de l'étape du procédé B).

10. Procédé selon la revendication 9, dans lequel la nouvelle mise en œuvre du procédé est effectuée à partir de l'étape du procédé B) en tenant compte de l'au moins un paramètre déjà utilisé, de l'au moins une information de pièce déjà utilisée et/ou de l'au moins une grandeur déjà été utilisée.

11. Procédé selon l'une quelconque des revendications précédentes, dans lequel la détection du résultat de retrait est effectuée dans l'étape du procédé G) à l'aide d'au moins un capteur (22).

12. Machine (10) permettant de mettre en œuvre un procédé (28) selon l'une quelconque des revendications précédentes, dans laquelle ladite machine (10) comprend:
i) un outil de retrait à commande par paramètre (18);
ii) une mémoire de résultats de retrait (24) permettant de sauvegarder les résultats de retrait;
iii) une unité de commande (26) connectée à l'outil de retrait (18) et à la mémoire de résultats de retrait (24) et conçue pour traiter l'au moins un paramètre pour l'outil de retrait (18) et une information de pièce pour obtenir une grandeur;
dans lequel l'unité de commande (26) est conçue pour créer une prévision de retrait prenant en compte la grandeur et au moins un résultat de retrait de la mémoire de résultats de retrait (24), dans laquelle la prévision de retrait indique la probabilité d'un retrait réussi, et
dans lequel l'unité de commande (26) est conçue pour comparer la grandeur avec une grandeur correspondante de l'au moins un résultat de retrait de la mémoire de résultats de retrait;
dans lequel l'unité de commande (26) est conçue pour évaluer la prévision de retrait; dans lequel l'unité de commande (26) est conçue pour commander l'outil de retrait (18) pour retirer la pièce (14) en cas de prévision positive de retrait; dans lequel l'unité de commande (26) est conçue pour mémoriser le résultat de retrait avec le paramètre pour l'outil de retrait (18) et l'information de pièce sur une pièce (14) dans la mémoire de résultats de retrait.

13. Machine selon la revendication 12, en particulier destinée de mettre en œuvre un procédé selon la revendication 2, selon lequel la machine (10) comporte une machine-outil (12) destinée à former la pièce (14).

14. Machine selon l'une quelconque des revendications 12 ou 13, en particulier destinée à mettre en œuvre un procédé selon la revendication 3, selon lequel l'outil de retrait (18) comporte une ventouse.

15. Machine selon la revendication 14, en particulier destinée à mettre en œuvre un procédé selon la revendication 4, selon lequel la ventouse comporte une pluralité de broches de ventouse (20).
